# EUROPEAN PATENT APPLICATION

(11) **EP 2 374 865 A2**
(43) Date of publication of application: **12.10.2011**
(21) Application number: 09832126.8
(22) Date of filing: 09.12.2009
(51) Int. Cl.: C10M 125/00, C10M 129/04, C10M 173/00, C09K 5/20

(54) **ADDITIVE COMPOSITION FOR AUTOMOBILE**

(30) Priority: 09.12.2008 KR 20080124637
(71) Applicant: ICT Merchandise Broker and Trading GmbH, 86150 Augsburg (DE)
(72) Inventor: YOU, Jong Sun, Ansan-si Gyeonggi-do 426-171 (KR)
(74) Representative: Müller, Eckhard
(86) International application number: PCT/KR2009/007368
(87) International publication number: WO 2010/068041

(57) **Abstract**

An automotive additive composition in the present invention comprises, based on the total weight of the composition, 20 wt% of germanium, 20 wt% of tourmaline, 5 wt% of bamboo vinegar, 10 wt% of glycol, 20/3 wt% of calcium, 20/3 wt% of zeolite, 5 wt% of a rust inhibitor, 10 wt% of elvan, and 50/3 wt% of distilled water.

## Description

### Technical Field

The present invention relates to an automotive additive composition, and more particularly to an automotive additive composition which is an environmentally friendly antifreeze that does not cause the emission of toxic substances after a vehicle accident, is added into a coolant (radiator) unlike conventional antifreezes, reduces the emission of exhaust gas (i.e., smoke), and shows a fuel saving effect (fuel economy-improving effect).

### Background Art

Conventional automotive additive compositions comprise chemical substances and therefore they have a problem in that they are discharged to the outside after a vehicle accident to cause secondary damage. This problem also arises when the automotive additive composition is disposed of after use.

Also, although many agents for improving the performance of vehicles have been reported, they are divided into performance improvers that are added to fuel, and performance improvers that are added to engine oil. These performance improvers are inconvenient in that they should be added always when fuel is injected or engine oil is replaced. For this reason, the performance improvers also impose a heavy cost burden, and the disposal of the performance improvers causes environmental problems.

### Disclosure

### Technical Problem

The present invention has been made in order to solve the above-described problems occurring in the prior art, and it is an object of the present invention to provide an automotive additive composition which comprises environmentally friendly substances that do not cause environmental problems, and is added to a coolant (radiator) unlike the prior art.

Another object of the present invention is to provide an automotive additive composition which reduces the emission of exhaust gas (i.e., smoke).

### Technical Solution

To achieve the above objects, it is preferred that an automotive additive composition of the present invention comprise, based on the total composition of the composition, 20 wt% of germanium, 20 wt% of tourmaline, 5 wt% of bamboo vinegar, 10 wt% of glycol, 20/3 wt% of calcium, 20/3 wt% of zeolite, 5 wt% of a rust inhibitor, 10 wt% of elvan, and 50/3 wt% of distilled water.

Also, the automotive additive composition is added to a coolant.

In addition, the glycol is preferably propylene glycol.

### Advantageous Effects

An automotive additive composition according to one embodiment of the present invention comprises environmentally friendly substances that do not cause environmental problems. Thus, unlike the prior art, the automotive additive composition of the present invention is safe so that it may be disposed of without special treatment, and comprises substances harmless to the human body.

Also, the automotive additive composition of the present invention is added to a coolant (radiator) unlike the prior art, and thus gives less burden on the automotive body and engine.

Moreover, the automotive additive composition of the present invention shows an excellent effect of reducing smoke emission, because it generally reduces smoke emission by about 60-70%.

Furthermore, the automotive additive composition of the present invention shows the effect of reducing fuel consumption by about 5-10% (fuel economy-improving effect).

In addition, the automotive additive composition of the present invention shows the effect of increasing power output by about 2-10 ps.

### Brief Description of Drawings

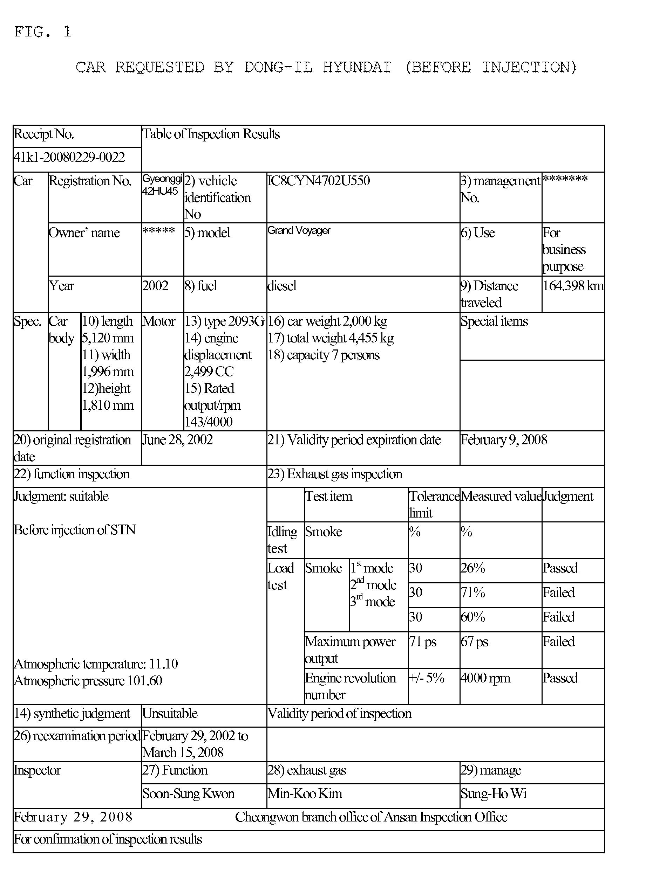

FIG. 1 is a table showing the results of carrying out a load test for a Grandeur XG car (manufactured by Hyundai Motors Company in 2002) in a Cheongwon branch office of Ansan Inspection Office (designated by the Korean Ministry of Environment) before injecting an automotive additive composition of Example 1 of the present invention into the Grandeur XG car.

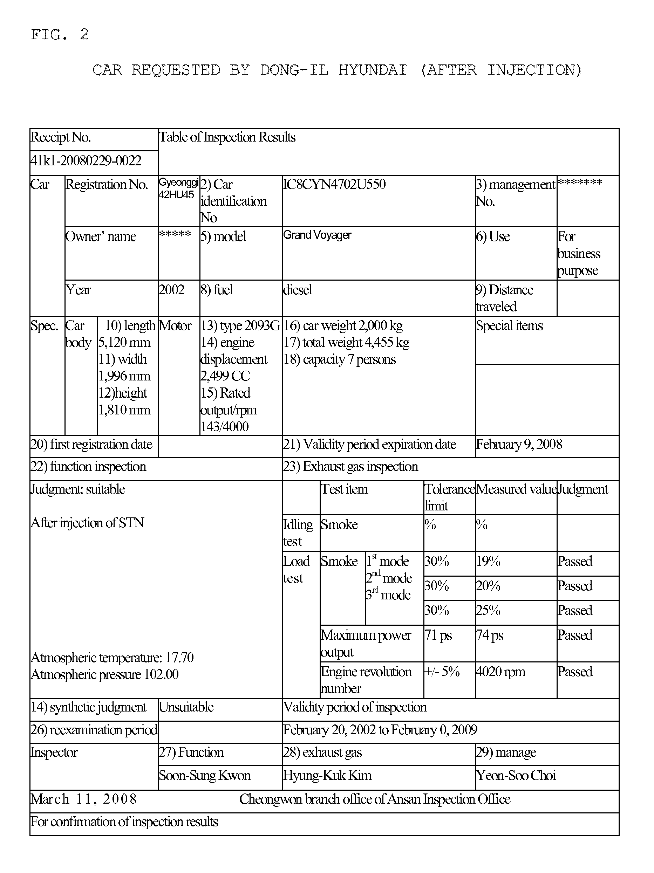

FIG. 2 is a table showing the results of carrying out a load test for a Grandeur XG car (manufactured by Hyundai Motors Company in 2002) in a Cheongwon branch office of Ansan Inspection Office (designated by the Korean Ministry of Environment) after injecting an automotive additive composition of Example 1 of the present invention into the Grandeur XG car.

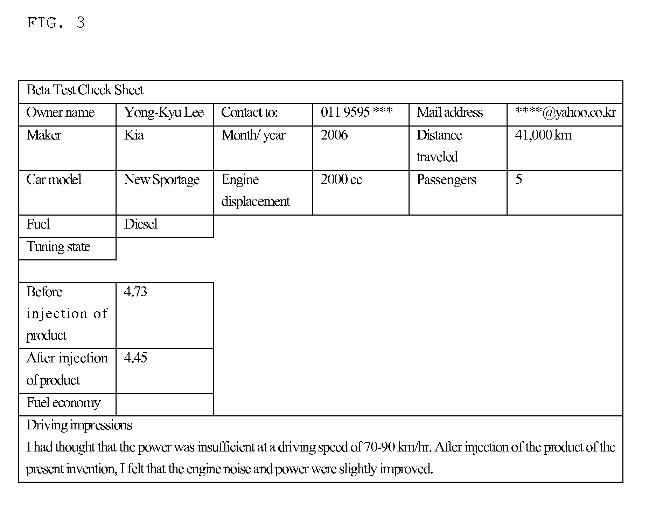

FIG. 3 is a check sheet showing the results of measuring the fuel economy of a New Sportage car (manufactured by Kia Motors Company in 2006) that has run 70.2 Km on Ja-Yu-Ro (Freeway, Korea) before and after injecting an automotive additive composition of Example 3 of the present invention into the New Sportage car.

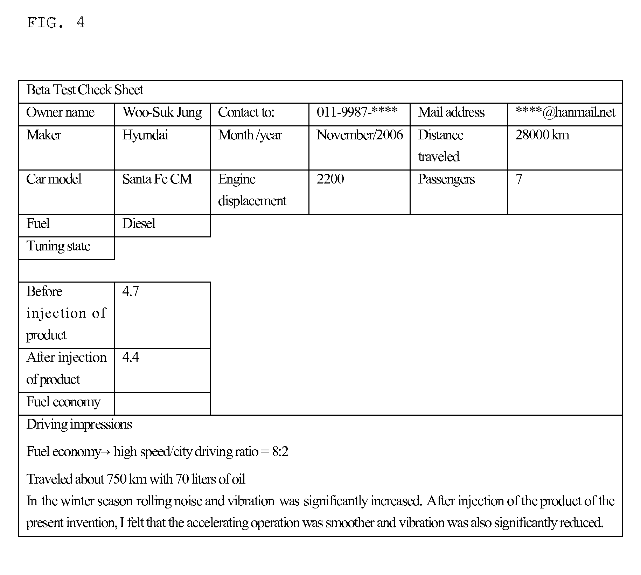

FIG. 4 is a check sheet showing the results of measuring the fuel economy of a Santa Fe car (manufactured by Hyundai Motors Company in 2006) that has run 70.2 Km on Ja-Yu-Ro (Freeway, Korea) before and after injecting an automotive additive composition of Example 3 of the present invention into the New Sportage car.

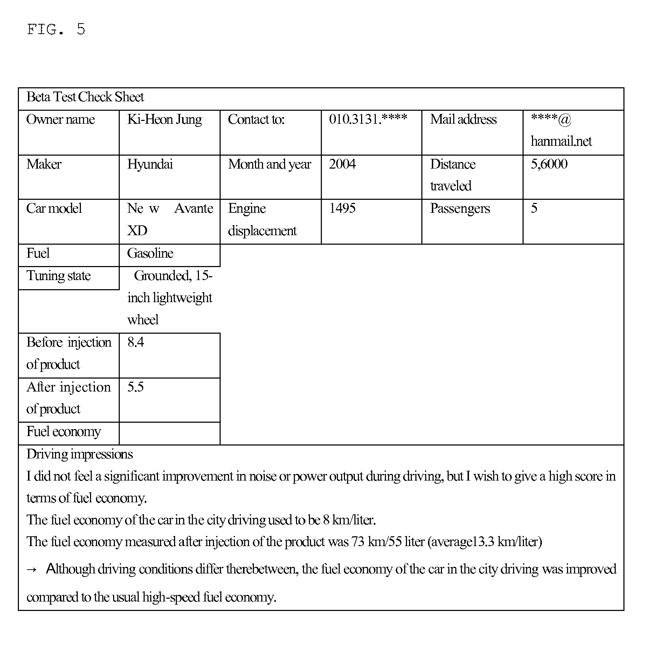

FIG. 5 is a check sheet showing the results of measuring the fuel economy of a New Avante car (manufactured by Hyundai Motors Company in 2004) that has run 70.2 Km on Ja-Yu-Ro (Freeway, Korea) before and after injecting an automotive additive composition of Example 3 of the present invention into the New Sportage car.

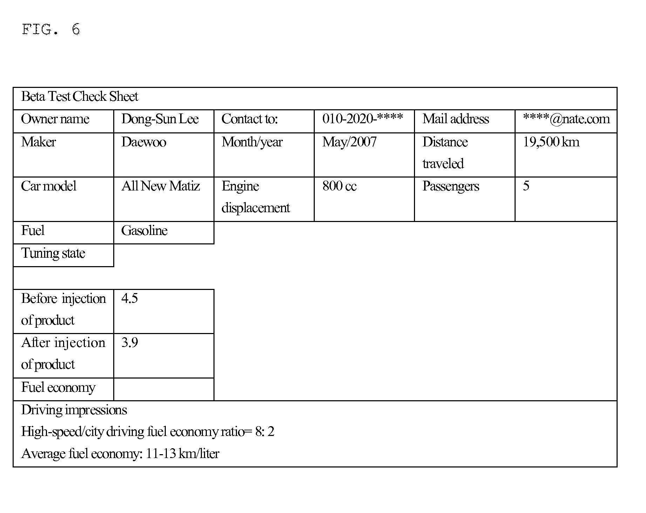

FIG. 6 is a check sheet showing the results of measuring the fuel economy of a All New Matiz car (manufactured by GM Daewoo Motors Company in 2007) that has run 70.2 Km on Ja-Yu-Ro (Freeway, Korea) before and after injecting an automotive additive composition of Example 3 of the present invention into the All New Matiz car.

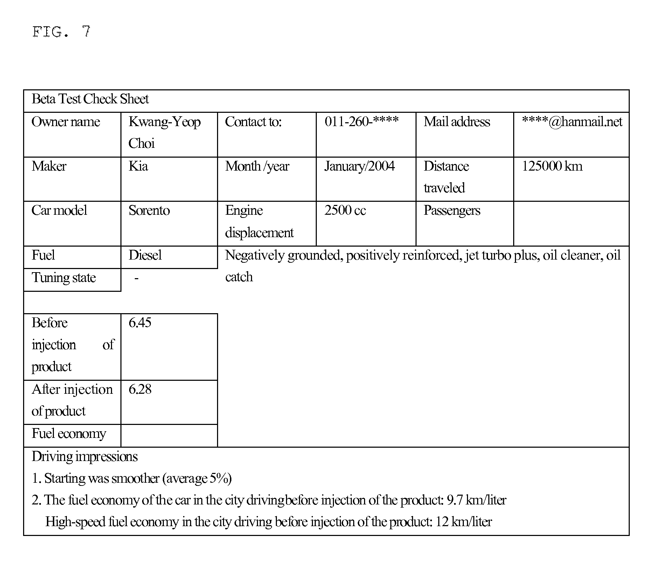

FIG. 7 is a check sheet showing the results of measuring the fuel economy of a Sorento car (manufactured by Kia Motors Company in 2004) that has run 70.2 Km on Ja-Yu-Ro (Freeway, Korea) before and after injecting an automotive additive composition of Example 3 of the present invention into the Sorento car.

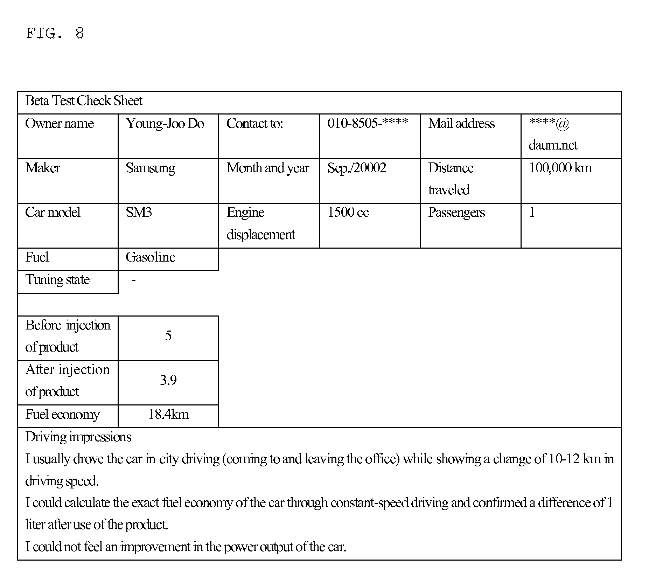

FIG. 8 is a check sheet showing the results of measuring the fuel economy of a SM3 car (manufactured by Renault Samsung Motors Company in 2002) that has run 70.2 Km on Ja-Yu-Ro (Freeway, Korea) before and after injecting an automotive additive composition of Example 3 of the present invention into the SM3 car.

### Best Mode

Hereinafter, the present invention will be described in further detail with reference to examples, but the scope of the present invention is not limited to these examples.

### (Example 1)

The present inventor has carried out many years of experiments on an automotive additive composition which reduces the emission of carbon dioxide from cars and improves fuel economy. Breaking from the conventional concept, the present inventor has carried out experiments on a composition based on natural mineral stones as main components in order to prevent environmental pollution. In 2 years of experiments, including a vehicle road running test, the present inventor has carried out experiments based on data regarding a safety, a reduction in carbon emission, an increase in fuel economy, etc.

As a result, the present inventor has found that an automotive additive composition according to one embodiment of the present invention, disclosed in this Example, showed the best experimental results as described below.

This automotive additive composition according to one embodiment of the present invention contains, based on the total weight of the composition, 60 g of germanium, 60 g of tourmaline, 15 g of bamboo vinegar, 30 g of glycol, 20 g of calcium, 20 g of zeolite, 15 g of a rust inhibitor, 30 g of elvan, and 50 g of distilled water.

Germanium that is used in the present invention emits many far-infrared rays and anions and supplies oxygen to water in a coolant, thus provides the effect of refreshing the coolant. Germanium emits anions as the engine temperature increases, so that it provides the effects of cleaning the indoor air of the car, deodorizing the air in the car and reducing driver's fatigue.

Tourmaline that is used in the present invention is also called "electric stone" and was first discovered in the island Ceylon in 1703. Tourmaline does not emit magnetic fields or radiations, and thus is harmless to the human body. According to study results, tourmaline is not influenced by electrical/electronic phenomena and has a very good effect of blocking electromagnetic waves or water veins. In the present invention, tourmaline serves to absorb and purify heat, moisture and smoke from cars.

As used herein, the term "bamboo vinegar" refers to a material obtained by burning bamboo and vaporizing it and after that by cooling and liquefying it. Antifreezes that are used as automotive coolants are generally made of chemical substances. A coolant is generally used for several years after it has been injected into a car, and for this reason, a corrosion and water scale occur in the coolant, and if the corrosion and water scale are accumulated, the function of the coolant will be significantly reduced. The biggest problem in this case is that the pressure of the radiator can be increased so that the car cannot function. To solve this problem, bamboo vinegar is used in the present invention so that it can kill various bacteria in water and remove water scale, whereby the coolant can be returned to its original state.

Glycol that is used in the present invention is also called "diol" having two hydroxyl groups. It is used in the form of primary alcohol, secondary alcohol or tertiary alcohol as a material for preparing a coolant. Propylene glycol was approved for food use by the Korean Food and Drug Administration, and propylene glycol that is used in the present invention can prevent rupture in the winter season and is environmentally friendly enough to be used for food purpose.

Also, zeolite that is used in the present invention is mainly used as an adsorbent and a cation exchange agent in the industrial field. Zeolite has fine pores of Angstrom dimensions, that is, innumerable pores, like sponges or honeycombs, so that it can adsorb water or various gases. Due to such structural characteristics, it can also be used as a molecular sieve for separating small molecules from large molecules. Zeolite having such characteristics also has the property of adsorbing exhaust gas from cars, and when it is added to a coolant, it will adsorb water scale, bacteria or harmful substances, which will be settled or neutralized by oxidation.

The rust inhibitor that is used in the present invention serves to prevent the inside of the engine cylinder from being rusted, to prevent rubbers that are used in the engine cylinder from being oxidized, and to reduce pressure caused by water circulation.

Elvan that is used in the present invention is preferably added in a powder form.

FIG. 1 is a table showing the results of carrying out a load test for a Grandeur XG car (manufactured by Hyundai Motors Company in 2002) in a Cheongwon branch office of Ansan Inspection Office (designated by the Korean Ministry of Environment) before injecting an automotive additive composition of Example 1 of the present invention into the coolant radiator of the car; and FIG. 2 is a table showing the results of carrying out a load test for a Grandeur XG car (manufactured by Hyundai Motors Company in 2002) in a Cheongwon branch office of Ansan Inspection Office (designated by the Korean Ministry of Environment) after injecting an automotive additive composition of Example 1 of the present invention into the coolant radiator of the car.

The term "first mode" of a smoke test in the "load test" section of FIGS. 1 and 2 refers to 4000 rpm at a speed of 80 km/hr, the term "second mode" refers to 4000 rpm at a speed of 60 km/hr, and the term "third mode" refers to 3000 rpm at a speed of 40 km/hr.

As shown in FIG. 1, the Grandeur XG car used in this Example was judged unsuitable, because it showed a smoke emission of 71% which exceeds the tolerance limit (30%) in the second mode of the smoke test and also showed a smoke emission of 60% which exceeds the tolerance limit (30%) in the third mode of the smoke test.

Also, as shown in FIG. 1, the Grandeur XG car was judged unsuitable in the maximum power output test of the load test, because it showed a maximum power output of 67 ps which satisfies the tolerance limit (71 ps).

The same Grandeur XG car that has been judged unsuitable as described above was injected with the automotive additive composition of this Example and tested in the same manner as described above. The test was carried out under the same conditions as described above, except that the automotive additive composition prepared in Example of the present invention was added to the coolant radiator.

As shown in FIG. 2, the Grandeur XG car showed a reduction in smoke emission from 26% to 19% in the first mode of the smoke test and also showed a smoke emission of 20% which satisfies the tolerance limit (30%) in the second mode of the smoke test. Thus, it could be seen that the injection of the automotive additive composition reduced smoke emission from 71% before injection of the composition, to 20%.

Also, the Grandeur XG car that has been judged unsuitable in the third mode of the smoke test showed a smoke emission of 25% which satisfies the tolerance limit (30%) in the third mode of the smoke test after injection of the inventive composition. Thus, it could be seen that the injection of the automotive additive composition reduced smoke emission from 60% before injection of the composition, to 25%.

Also, the Grandeur XG car that has been judged unsuitable in the maximum power output test was judged suitable in the maximum power output test after injection of the inventive composition, because it showed a maximum power output of 74 ps which exceeds the tolerance limit (71 ps). Thus, it could be seen that the injection of the automotive additive composition increased the maximum power output from 67 ps before injection of the composition to 74 ps.

It is to be understood that the inspectors were not aware of the components of the automotive additive composition according to one embodiment of the present invention and carried out only inspection before and after injecting the automotive additive composition into the car.

Also, the present invention can be applied to automobiles, motors, ships, electric generators, agricultural machines, diesel engines, etc. Namely, the present invention can be applied to all systems including a coolant.

### (Example 2)

The components of an automotive additive composition used in this Example 2 are the same as those of Example 1 above. In other words, the automotive additive composition of Example 2 contains, based on the total weight of the composition, 60 g of germanium, 60 g of tourmaline, 15 g of bamboo vinegar, 30 g of glycol, 20 g of calcium, 20 g of zeolite, 15 g of a rust inhibitor, 30 g of elvan, and 50 g of distilled water.

Table 1 below shows the 3-month (May to July, 2008) average fuel economy (km/liter) of a Renault Samsung SM723 car before injecting the automotive additive composition of Example 2 of the present invention into the car, and Table 2 below shows the 3-month (August to October, 2008) average fuel economy (km/liter) of the Renault Samsung SM723 car after injecting the automotive additive composition of Example 2 of the present invention into the car.

**[Table 1]**

| 3-month average fuel economy before injection of automotive additive composition according to Example 2 of the present invention: 10.92km | | | | | | |
|---|---|---|---|---|---|---|
| Monthly report | Total distance traveled (km) | Monthly distance traveled (km) | Price (Korea Won)per liter | Amount (liter) of oil injected | Price (Korea Won) of oil injected | Fuel economy |
| May | 7,371 | 1,405 | 1,767 | 136 | 240,312 | 10.33 |
| Monthly report | Total distance traveled (km) | Monthly distance traveled (km) | Price (Korea Won)per liter | Amount (liter) of oil injected | Price (Korea Won) of oil injected | Fuel economy |
| June | 8,774 | 1,403 | 1,876 | 123 | 230,748 | 11.40 |
| July | 10,392 | 1,618 | 1,912 | 146 | 279,152 | 11.08 |

**[Table 2]**

| 3-month average fuel economy after injection of automotive additive composition according to Example 2 of the present invention: 11.59km | | | | | | |
|---|---|---|---|---|---|---|
| Monthly report | Total distance traveled (km) | Monthly distance traveled (km) | Price (Korea Won) per liter | Amount (liter) of oil injected | Price (Korea Won) of oil injected | Fuel economy |
| August | 11,800 | 1,408 | 1,815 | 121 | 219,615 | 11.64 |
| Monthly report | Total distance traveled (km) | Monthly distance traveled (km) | Price (Korea Won) per liter | Amount (liter) of oil injected | Price (Korea Won) of oil injected | Fuel economy |
| September | 13,850 | 2,050 | 1,715 | 183 | 313,845 | 11.20 |
| Monthly report | Total distance traveled (km) | Monthly distance traveled (km) | Price (Korea Won) per liter | Amount (liter) of oil injected | Price (Korea Won) of oil injected | Fuel economy |
| October | 15,400 | 1,550 | 1,651 | 128 | 211,328 | 12.11 |

As can be seen in Tables 1 and 2 above, when the fuel economy of the SM723 car was measured before and after injecting the automotive additive composition of Example 2 of the present invention into the car, it could be seen that the fuel economy was increased by 6% (from 10.92 Km/liter to 11.59 Km/liter).

For reference, the test was carried out under the same conditions as those of Example 1, except that the automotive additive composition of Example 2 of the present invention was injected into the car.

### (Example 3)

FIG. 3 is a check sheet showing the results of measuring the fuel economy of a New Sportage car (manufactured by Kia Motors Company in 2006) that has run 70.2 Km on Ja-Yu-Ro (Freeway, Korea) before and after injecting an automotive additive composition of Example 3 of the present invention into the New Sportage car; FIG. 4 is a check sheet showing the results of measuring the fuel economy of a Santa Fe car (manufactured by Hyundai Motors Company in 2006) that has run 70.2 Km on Ja-Yu-Ro (Freeway, Korea) before and after injecting an automotive additive composition of Example 3 of the present invention into the car; FIG. 5 is a check sheet showing the results of measuring the fuel economy of a New Avante car (manufactured by Hyundai Motors Company in 2004) that has run 70.2 Km on Ja-Yu-Ro (Freeway, Korea) before and after injecting an automotive additive composition of Example 3 of the present invention into the car; FIG. 6 is a check sheet showing the results of measuring the fuel economy of a All New Matiz car (manufactured by GM Daewoo Motors Company in 2007) that has run 70.2 Km on Ja-Yu-Ro (Freeway, Korea) before and after injecting an automotive additive composition of Example 3 of the present invention into the car; FIG. 7 is a check sheet showing the results of measuring the fuel economy of a Sorento car (manufactured by Kia Motors Company in 2004) that has run 70.2 Km on Ja-Yu-Ro (Freeway, Korea) before and after injecting an automotive additive composition of Example 3 of the present invention into the car; and FIG. 8 is a check sheet showing the results of measuring the fuel economy of a SM3 car (manufactured by Renault Samsung Motors Company in 2002) that has run 70.2 Km on Ja-Yu-Ro (Freeway, Korea) before and after injecting an automotive additive composition of Example 3 of the present invention into the car.

In Example 3 as shown in FIGS. 3 to 8, the oil tanks of the six cars were fully filled with oil, and then all the six cars ran 70.2 Km on Ja-Yu-Ro (Freeway, Korea) at a constant speed (about 80-90 Km/hr). In this Example, the cars ran in a state in which the automotive additive composition of the present invention was not injected into the cars, after which the oil tanks were filled with oil in an oil station while examining the amount of oil injected until the oil tanks were fully filled, thereby measuring the amount of oil consumed when the cars ran 70.2 Km.

As can be seen in FIG. 3, when the car ran 70.2 Km, it consumed 4.73 liter of fuel, and as can be seen in FIGS. 4 to 8, when the cars ran 70.2 Km, they consumed 4.7 liter, 8.4 liter, 4.5 liter, 6.45 liter and 5 liter of oil, respectively. The fuel economies of the cars were 14.8 Km/liter, 14.9 Km/liter, 8.4 Km/liter, 15.6 Km/liter, 10.9 Km/liter, and 14 Km/liter, respectively.

After the cars have run in a state in which the automotive additive composition was not injected, the cars were injected with the automotive additive composition and then ran 70.2 Km. In the same manner as described above, after the cars have run 70.2 Km, the oil tanks were filled with oil in an oil station while examining the amount of oil injected until the fuel tanks were fully filled, thereby measuring the amount of oil consumed during the cars ran 70.2 Km.

As can be seen in FIG. 3, when the car ran 70.2 Km, it consumed 4.45 liter of oil, and as can be seen in FIGS. 4 to 8, when the cars ran 70.2 Km, they consumed 4.4 liter, 5.5 liter, 3.9 liter, 6.28 liter and 3.9 liter of oil, respectively. The fuel economies of the cars were 15.8 Km/liter, 16 Km/liter, 12.8 Km/liter, 18 Km/liter, 11.2 Km/liter, and 18 Km/liter, respectively.

Such results indicate that the automotive additive composition of the present invention increases the fuel economy of cars.

Although the preferred embodiments of the present invention have been described for illustrative purposes, those skilled in the art will appreciate that various modifications, additions and substitutions are possible, without departing from the scope and spirit of the invention as disclosed in the accompanying claims.

## Claims

1. An automotive additive composition comprising, based on the total weight of the composition, 20 wt% of germanium, 20 wt% of tourmaline, 5 wt% of bamboo vinegar, 10 wt% of glycol, 20/3 wt% of calcium, 20/3 wt% of zeolite, 5 wt% of a rust inhibitor, 10 wt% of elvan, and 50/3 wt% of distilled water.

2. The automotive additive composition of claim 1, wherein the automotive additive composition is added to a coolant.

3. The automotive additive composition of claim 1, wherein the glycol is propylene glycol.
